# EUROPÄISCHE PATENTSCHRIFT

(11) **EP 0 664 245 B1**
(45) Veröffentlichungstag und Bekanntmachung des Hinweises auf die Patenterteilung: **10.09.1997**
(21) Anmeldenummer: 95100882.0
(22) Anmeldetag: 24.01.1995
(51) Int. Cl.: B60R 21/16, G01M 17/007

(54) **Vorrichtung zum Testen von Airbags**
Airbag testing device
Dispositif pour tester des sacs gonflables

(30) Priorität: 25.01.1994 DE 4401985
(43) Veröffentlichungstag der Anmeldung: 26.07.1995
(73) Patentinhaber: Althammer GmbH u. Co KG Edelstahlbau, D-89520 Heidenheim (DE)
(72) Erfinder: Niederberger, Klaus, D-89542 Herbrechtingen (DE); Niederberger, Peter Klaus, Dipl.-Ing., D-89542 Herbrechtingen-Bolheim (DE)
(74) Vertreter: Lorenz, Werner, Dipl.-Ing.

(56) Entgegenhaltungen:
- DE-A- 4 143 007

## Beschreibung

Die Erfindung betrifft eine Vorrichtung zum Testen von Airbags in einem druckdichten an einem Rahmen schwenkbar aufgehängten Behälter mit einem Deckel.

Airbags bestehen im wesentlichen aus einem Sack sowie dem Gasgenerator, wobei zum Aufblasen des Airbags der Gasgenerator gezündet wird. Es ist daher notwendig, insbesondere die Funktionsfähigkeit des Gasgenerators zu gewährleisten. Es soll deshalb nachfolgend immer von Airbags bzw. Gasgeneratoren die Rede sein, wobei sich die erfindungsgemäße Vorrichtung aber immer auf das Testen der Gasgeneratoren von Airbags bezieht.

Zum Testen der Wirksamkeit von Airbags sind Druckbehälter bekannt, die auf einem Gestell bzw. Rahmen fest angeordnet sind. Die Behälter weisen im allgemeinen druckdichte Deckel auf. Nach Schließen des Deckels wird ein Sprengsatz oder ein Gasgenerator (Gaspatrone) gezündet und die Entfaltbarkeit bzw. die Druckaustreibung des Airbags kontrolliert. Ebenso wird dabei auch die Zündsicherheit bzw. der Druckverlauf/Druckaufbau untersucht.

Bei diesem Test ist auch erforderlich, die Rückstände des Sprengsatzes zu untersuchen. Hierzu werden die Behälterwände entsprechend mit Flüssigkeit gereinigt und dann diese Flüssigkeit mit den Sprengsatzrückständen (Gasrückständen) untersucht.

Zum Auslassen der Flüssigkeit aus dem Behälter ist dieser im allgemeinen zum Deckel hin leicht geneigt in dem Gestell befestigt oder innerhalb des Gestelles drehbar gelagert, so daß die Flüssigkeit bei geöffnetem Deckel herauslaufen und in einem entsprechenden Behälter aufgefangen werden kann.

Eine drehbare Lagerung des Behälters hat zusätzlich noch den Vorteil, daß die Behälterinnenwände relativ einfach gereinigt werden können.

Eine Vorrichtung der beschriebenen Art zum Testen von Airbags ist aus der DE 41 43 007 A1 bekannt. In der genannten Druckschrift werden jedoch keinerlei Angaben darüber gemacht, wie die Airbags bzw. die Gasgeneratoren in dem Behälter befestigt sind. Um genaue Versuchsergebnisse zu erhalten, sollten die Airbags jedoch immer in einer gleichen Position getestet werden, außerdem sind die Airbags der einzelnen Hersteller unterschiedlich ausgeführt, was deren Größe und Befestigungseinrichtungen angeht, so daß ein und dieselbe Aufnahmeeinrichtung nicht unbedingt für jeden Airbag geeignet ist.

Der vorliegenden Erfindung liegt daher die Aufgabe zugrunde, die Vorrichtung zum Testen von Airbags nach der DE 41 43 007 A1 dahingehend zu verbessern, daß Airbags unterschiedlicher Form und Größe problemlos in einer Vorrichtung getestet werden können.

Erfindungsgemäß wird diese Aufgabe dadurch gelöst, daß im Inneren des Behälters eine auswechselbare Aufnahmeeinrichtung zur Aufnahme unterschiedlicher Airbags am Deckel des Behälters angeordnet ist.

Durch das Vorsehen einer auswechselbaren Aufnahmeeinrichtung können Airbags unterschiedlicher Größe schnell und einfach in die jeweils passende Aufnahmeeinrichtung eingesetzt werden, so daß die Versuche zum Testen der Airbags schnell und somit kostengünstig durchgeführt werden können.

Durch die Anordnung der Aufnahmeeinrichtung am Deckel des Behälters kann diese, wenn der Deckel geöffnet ist, schnell und einfach montiert bzw. demontiert werden, da bei geöffnetem Deckel eine sehr gute Zugänglichkeit zu der Aufnahmeeinrichtung gewährleistet ist.

Um die Aufnahmeeinrichtung möglichst kostengünstig herstellen zu können, kann vorgesehen sein, daß die Aufnahmeeinrichtung auch ein Zwischenstück und ein Aufnahmeglied aufweist.

Das Zwischenstück kann hierbei fest am Deckel des Behälters, und zwar auf der Innenseite des Behälters, angebracht sein, so daß nur das Aufnahmeglied entfernt wird, wenn ein neuer Airbag in die Vorrichtung eingesetzt werden soll.

Um das Anbringen des Aufnahmegliedes auf dem Zwischenstück zu beschleunigen kann vorgesehen sein, daß das Zwischenstück und das Aufnahmeglied mit einem Schnellverschluß versehen sind.

Hierdurch ist gewährleistet, daß das Zwischenstück und das Aufnahmeglied schnell und problemlos miteinander verbindbar und somit die Versuche zum Testen von Airbags schnell und effektiv durchführbar sind.

In vorteilhafter Weise kann die Erfindung so ausgebildet sein, daß auf dem Aufnahmeglied eine Halterung für die Airbags vorgesehen ist.

Durch die Halterung wird gewährleistet, daß die Airbags beim Zünden des Sprengsatzes fest auf dem Aufnahmeglied gehalten sind, so daß keine Verfälschung der Meßergebnisse entstehen kann.

Vorteilhafterweise kann die Halterung so vorgesehen sein, daß der Airbag auf einer prismenförmigen Vertiefung aufliegt.

Da die Airbags bzw. die Gasgeneratoren meist ein rundes Gehäuse aufweisen, kann dieses runde Gehäuse optimal in die prismenförmige Vertiefung eingelegt werden, wobei nur zwei schmale Berührungslinien zwischen der prismenförmigen Vertiefung und dem Gehäuse des Airbags entstehen. Da der Gasgenerator aufgrund des gewünschten geringen Wärmeübergangs nur punkt- oder linienförmig auf der Halterung aufliegen soll, ist besonders vorteilhaft für unterschiedlich große Gasgeneratoren eine prismenförmige Vertiefung als Auflage.

Ein weiterer Vorteil der prismenförmigen Vertiefung ist die universelle Anwendbarkeit für eine Vielzahl unterschiedlicher Gehäuseformen der Airbags, da in die prismenförmige Vertiefung sehr viele unterschiedliche Gehäuseformen eingelegt werden können.

Damit das Gehäuse des Airbags bei der Zündung des Sprengsatzes nicht aus der Aufnahmeeinrichtung herausgeschleudert wird, kann vorgesehen sein, daß die Airbags formschlüssig in Haltegliedern gehaltert sind.

Da die Airbags je nach Herstellerfabrikat und Verwendungszweck (Fahrerairbag oder Beifahrerairbag) unterschiedliche Formen und Größen aufweisen, kann es von Vorteil sein, wenn wenigstens eines der Halteglieder auf dem Aufnahmeglied versetzt werden kann.

Hierdurch kann ein Aufnahmeglied für eine Vielzahl unterschiedlicher Airbags verwendet werden, ohne daß für jedes einzelne Airbagmodell ein vollkommen neues Aufnahmeglied angefertigt werden muß. Die Herstellungskosten der erfindungsgemäßen Vorrichtung können hierdurch erheblich reduziert werden.

Alternativ kann aber auch vorgesehen sein, daß das Halteglied als verstellbarer Bügel ausgeführt ist.

Auch verstellbare Bügel haben den Vorteil, daß sie sehr gut an unterschiedliche Größen und Gehäuseformen von Airbags angepaßt werden können und somit universell verwendbar sind. Ein verstellbarer Haltebügel kann aber auch als zusätzliche Sicherung zusammen mit den bereits angesprochenen formschlüssigen Haltegliedern verwendet werden.

Eine weitere Ausführungsform des Haltegliedes kann aber auch ein Kniehebelverschluß sein. Kniehebelverschlüsse und deren Vorteile sind insbesondere aus dem Vorrichtungsbau bekannt, so daß an dieser Stelle nicht näher auf diese Bauteile eingegangen werden muß.

Damit die Behälter in relativ großen Stückzahlen und mit relativ großen Toleranzen hergestellt werden können, kann vorteilhafterweise vorgesehen sein, daß in dem Behälter ein Füllkörper zur Volumenkalibrierung angeordnet ist.

Dies bedeutet, daß der Behälter mit relativ hohen Toleranzbereichen hergestellt werden kann und in einem anschließenden Arbeitsgang in den Behälter ein Füllkörper eingesetzt wird, dessen Volumen so vorgesehen ist, daß die Differenz aus dem Innenvolumen des Behälters und dem Volumen des Füllkörpers das gewünschte (Norm)-Volumen ergibt. Dieses Volumen beträgt beispielsweise zum Testen von Fahrerairbags 60 l ± 1 l und zum Testen von Beifahrerairbags 146 l ± 1 l.

Nachfolgend ist anhand der Zeichnung ein Ausführungsbeispiel der erfindungsgemäßen Vorrichtung prinzipmäßig beschrieben.

Es zeigt:
- Fig. 1: eine Seitenansicht eines Ausführungsbeispieles einer erfindungsgemäßen Vorrichtung,
- Fig. 2: in vergrößerter Darstellung die Einzelheit II der Fig. 2,
- Fig. 3: eine Seitenansicht eines Zwischenstücks,
- Fig. 4: einen Schnitt durch eine Aufnahmeeinrichtung entlang der Linie IV-IV der Fig. 5,
- Fig. 5: eine Draufsicht auf eine Aufnahmeeinrichtung,
- Fig. 6: eine Seitenansicht der Aufnahmeeinrichtung,
- Fig. 7: eine weitere Seitenansicht der Aufnahmeeinrichtung,
- Fig. 8: eine Seitenansicht eines in der Aufnahmeeinrichtung angeordneten Airbags, der mit einem Haltebügel gesichert ist,
- Fig. 9: eine Vorderansicht einer Halterung, die als Kniehebelverschluß ausgebildet ist,
- Fig. 10: eine Seitenansicht der Anordnung von Fig. 9,
und
- Fig. 11: eine Draufsicht auf die Anordnung der Fig. 9.

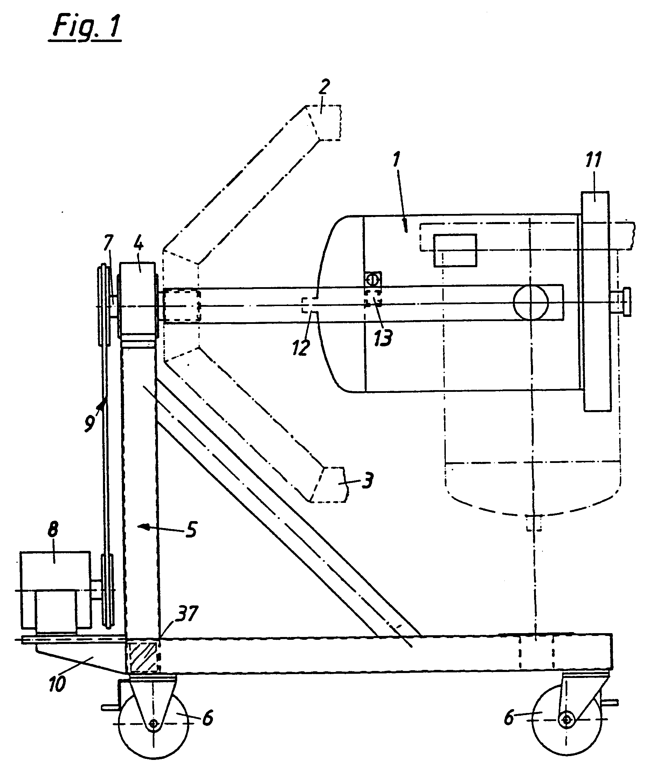

Bezugnehmend auf Fig. 1 ist eine Seitenansicht einer Vorrichtung zum Testen von Airbags dargestellt. Ein druckdichter Behälter 1 ist zwischen zwei gabelförmigen Streben 2, 3 drehbar gelagert. Die gabelförmigen Streben 2, 3 wiederum sind drehbar in einem Lager 4 gelagert, so daß der druckdichte Behälter 1 insgesamt gesehen kardanisch aufgehängt ist. Gegebenenfalls reicht jedoch auch eine einfache Schwenklagerung in nur einer Ebene, z.B. der Vertikalebene, aus. Das Lager 4 ist auf einem Rahmen 5 befestigt. Der Rahmen 5 ist eine Schweißkonstruktion aus Vierkanthohlprofilen, so daß der Rahmen selbst ein relativ geringes Gewicht aufweist. Auf der Unterseite des Rahmens 5 sind Rollen 6 angebracht, die einen problemlosen Transport der Vorrichtung zum Testen von Airbags ermöglichen.

Über eine durch das Lager 4 hindurchgehende Welle 7, auf der eine Riemenscheibe, ein Kettenrad, oder dergleichen befestigt ist, kann der druckdichte Behälter 1 über ein von einem Elektromotor 8 betätigtes Ketten- oder Riemengetriebe 9 bewegt werden. Der Elektromotor 8 ist auf einer Konsole 10 angeordnet, die fest mit dem Rahmen 5 verbunden ist.

Der Behälter 1 weist einen schwenkbaren Deckel 11 auf. Im Bodenbereich des druckdichten Behälters 1, also an der dem Deckel 11 gegenüberliegenden Seite des Behälters, ist eine Auslaßöffnung 12 zum Entleeren der Reinigungsflüssigkeit vorgesehen. Wird der Behälter 1 aus der dargestellten Lage um 90° gegen den Uhrzeigersinn in die durch die strichpunktierte Linie dargestellte Position verschwenkt, kann die Reinigungsflüssigkeit problemlos durch die Deckelöffnung des Behälters 1 eingefüllt werden und durch die Auslaßöffnung 12 den Behälter wieder verlassen.

Im Inneren des Behälters ist ein Füllkörper 13 angeordnet. Das Volumen des Füllkörpers 13 ist nicht fest, sondern hängt von dem Volumen des Behälters 1 ab, das nach dessen Herstellung gemessen wird. Ebenso ist die geometrische Form des Füllkörpers 13 nicht von Bedeutung.

Da zum Testen der Airbags bzw. der Gasgeneratoren zum Zünden derselben bestimmte Volumina von Vorteil sind (Fahrerairbags: 60 l, Beifahrerairbags: 146 l), können die herstellungsbedingten Toleranzen des Volumens des Behälters 1 durch das Einbringen des Füllkörpers 13 ausgeglichen werden. Das Volumen des Füllkörpers 13 wird dabei so gewählt, daß die Differenz aus dem Volumen des Behälters 1 und dem Volumen des Füllkörpers 13 das gewünschte Volumen, also beispielsweise 146 l oder 60 l, mit einer Toleranz von ± 1 l ergibt.

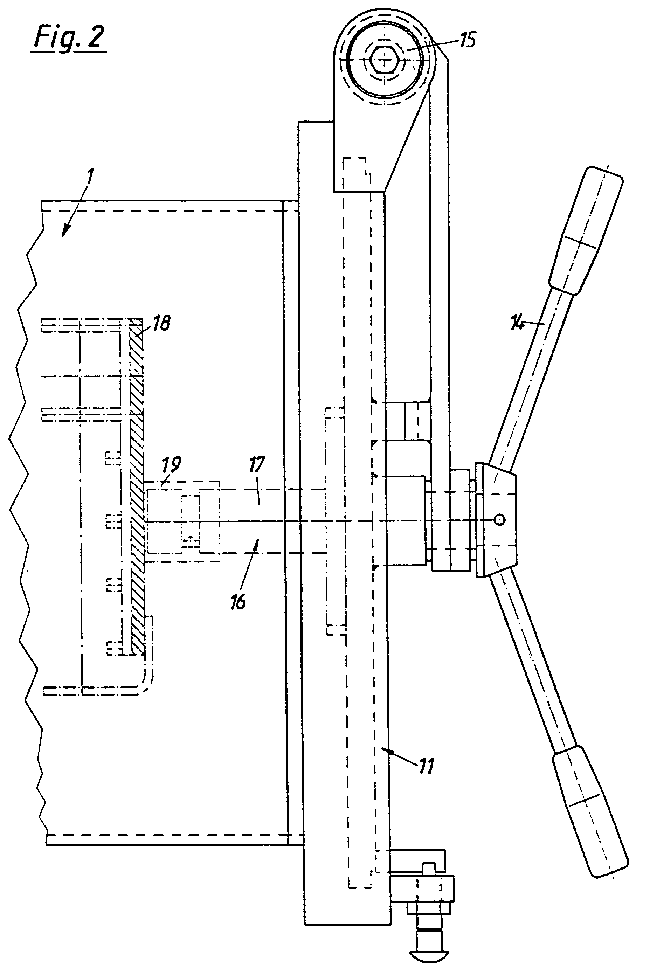

Fig. 2 zeigt in vergrößerter Darstellung das Detail II von Fig. 1. An dem Deckel 11 des Behälters 1 ist eine Einrichtung zum druckdichten Verschließen des Behälters 1 angebracht. Diese Einrichtung wird über eine Handkurbel 14 betätigt.

Um ein Wegschwenken des Deckels zu ermöglichen, ist dieser um ein Lager 15 verschwenkbar, wobei das Lager 15 an dem druckdichten Behälter 1 angebracht ist.

An der Innenseite des Deckels 11 ist eine Aufnahmeeinrichtung 16 angeordnet, die im wesentlichen aus zwei Bauteilen besteht, nämlich einem Zwischenstück 17 und einem Aufnahmeglied 18. Das Zwischenstück 17 ist hierbei fest auf dem Deckel 11 angebracht, das Aufnahmeglied 18 ist über einen Schnellverschluß 19 mit dem Zwischenstück 17 verbunden. Da das Zwischenstück 17 mittels einer lösbaren Verbindung, beispielsweise einer Schraubverbindung, an dem Deckel 11 angebracht ist, kann jedoch auch das Zwischenstück 17 gegebenenfalls entfernt werden.

Der Schnellverschluß 19 ist in dem vorliegenden Ausführungsbeispiel als eine an dem Aufnahmeglied 18 angebrachte Hülse ausgeführt, die auf einen komplementären Bolzen des Zwischenstücks 17 aufgesetzt wird und auf diesem Bolzen einrastet bzw. festgeschraubt wird. Selbstverständlich kann aber auch jeder andersartig ausgeführte Schnellverschluß verwendet werden.

Durch den zweiteiligen Aufbau der Aufnahmeeinrichtung 16, also das Zwischenstück 17 und das Aufnahmeglied 18, kann bei geöffnetem Deckel 11 das Aufnahmeglied 18 leicht von dem Zwischenstück 17 getrennt und somit das Aufnahmeglied 18 leicht aus dem Behälter 1 entfernt werden, so daß ein neuer Airbag bzw. Gasgenerator außerhalb des Behälters 1 in das Aufnahmeglied 18 eingesetzt werden kann. Alternativ kann, auch während ein Versuch zum Testen eines Airbags in dem Behälter 1 abläuft, außerhalb des Behälters 1 ein neuer Airbag in ein zusätzliches Aufnahmeglied 18 eingesetzt und sofort nach Beendigung des Versuchs die Aufnahmeglieder 18 ausgetauscht werden, so daß die Versuche in relativ kurzen Zeitabständen hintereinander ausgeführt werden können.

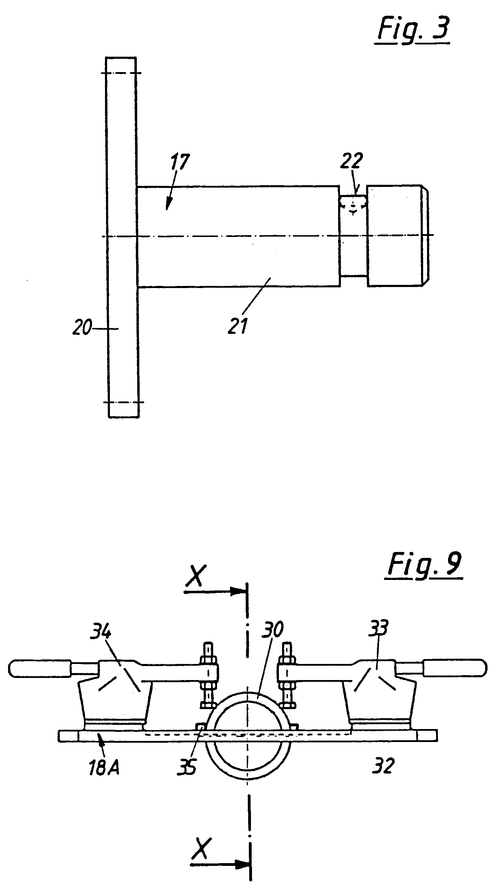

Fig. 3 zeigt eine Seitenansicht des bereits in Zusammenhang mit der Fig. 2 erwähnten Zwischenstückes 17. Über einen kreisförmigen Flansch 20, der fest mit einem Bolzen 21 verbunden ist, wird das Zwischenstück 17 an der Innenseite des Deckels 11 angebracht. In einer umlaufenden Nut 22 auf dem Bolzen 21 kann beispielsweise ein federndes Druckstück einrasten, so daß auf einfache und unproblematische Weise ein schnelles Auswechseln bzw. eine schnelle Verbindung des Aufnahmegliedes 18 mit dem Zwischenstück 17 möglich ist.

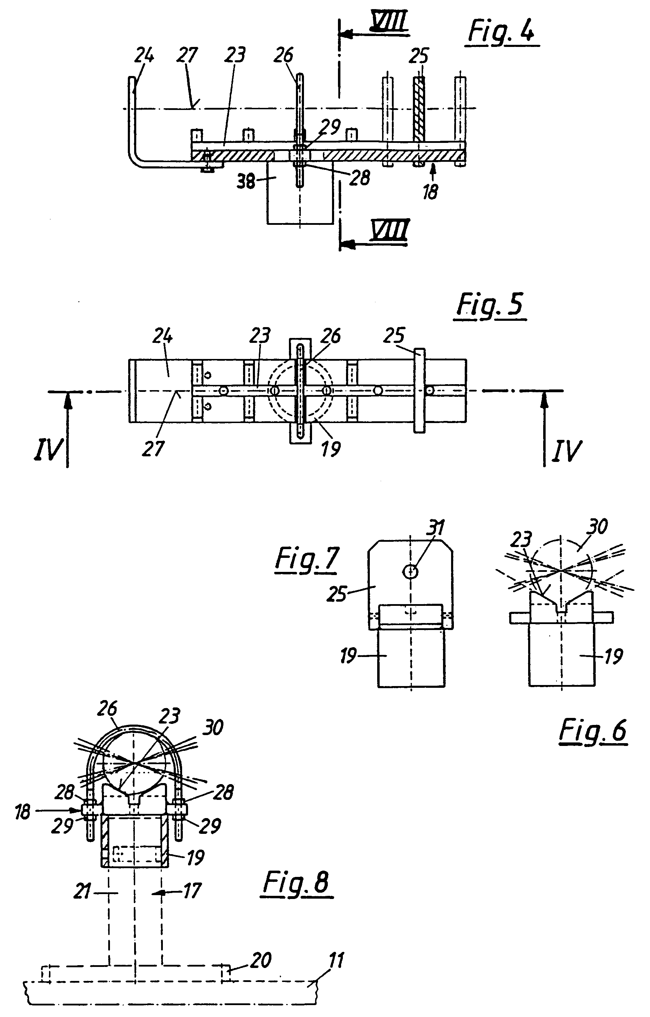

Fig. 4 zeigt einen Schnitt durch ein Aufnahmeglied 18 entlang der Linie IV-IV von Fig. 5.

Das Aufnahmeglied 18 besteht im wesentlichen aus einer Grundplatte mit einer prismenförmigen Vertiefung 23, der Buchse 38 für den Schnellverschluß zur Kupplung mit dem Zwischenstück 17, formschlüssigen Haltegliedern 24, 25 und einem verstellbaren Bügel 26.

Die Längsachse eines Airbags bzw. Gasgenerators, der auf dem Aufnahmeglied 18 angeordnet ist, ist durch die strichpunktierte Linie mit dem Bezugszeichen 27 gekennzeichnet. In der Verlängerung der Linie 27 befinden sich in den formschlüssigen Haltegliedern 24, 25 Aussparungen, in die hervorstehende Bauteile, beispielsweise Nasen, Bolzen und dergleichen, des Airbags eingesetzt werden können. Bei dem vorliegenden Ausführungsbeispiel ist das formschlüssige Halteglied 24 fest auf der Grundplatte mit der prismenförmigen Vertiefung 23 festgeschraubt, während das formschlüssige Halteglied 25 in Richtung der strichpunktierten Linie 27 versetzt werden kann, so daß ein Airbag leicht, problemlos und schnell auf das Aufnahmeglied 18 aufgesetzt werden kann. Außerdem dient das verstellbare Halteglied 25 der Anpassung an unterschiedlich lange Gasgeneratoren.

Zusätzlich zu den formschlüssigen Haltegliedern 24, 25 ist der verstellbare Bügel 26 vorgesehen, der den mittleren Bereich des Gehäuses des Airbags bzw. Gasgenerators gegen ein Herausfallen oder Wegschleudern während des Zündens des Sprengsatzes sichert. Die Höhe des Bügels 26 kann durch Verstellen der Einstellmuttern 28, 29 optimal an den jeweiligen Gehäusedurchmesser des Airbags angepaßt werden. Mit seiner Unterseite liegt der Gasgenerator in der prismenförmigen Vertiefung 23, so daß der Gasgenerator allseitig gegen ein Verrutschen oder Wegschleudern während des Sprengvorganges gesichert ist. Unter der Grundplatte mit der prismenförmigen Vertiefung 23 ist die Hülse 19 angeordnet, die ein Bestandteil des Schnellverschlusses zur Kupplung mit dem nicht dargestellten Zwischenstück 17 ist.

Zur Verdeutlichung der Ansicht der Fig. 4 ist in Fig. 5 eine Draufsicht auf diese Anordnung dargestellt. Die in Zusammenhang mit der Fig. 4 beschriebenen Bauteile sind in dieser Ansicht durch dieselben Bezugszeichen gekennzeichnet, so daß der Aufbau des Aufnahmegliedes 18 verständlicher wird.

Fig. 6 zeigt eine Seitenansicht des Aufnahmegliedes 18, wobei auf die Darstellung der formschlüssigen Halteglieder 24, 25 und des Haltebügels 26 verzichtet wurde. Auf der Grundplatte mit der prismenförmigen Vertiefung 23 ist ein Airbag bzw. Gasgenerator 30 angeordnet, der durch die runde strichpunktierte Linie angedeutet ist. Unterhalb der Grundplatte ist die Hülse 19 des Schnellverschlusses zur Kupplung des Aufnahmegliedes 18 mit dem Zwischenstück 17 angeordnet.

Fig. 7 zeigt eine Seitenansicht der Anordnung gemäß der Fig. 4, wobei die Anordnung von der rechten Seite aus, bezogen auf Fig. 4, betrachtet ist.

In dem formschlüssigen Halteglied 25 ist eine Bohrung 31 vorgesehen, in die entsprechende vorstehende Teile des Airbags, beispielsweise Nasen oder Bolzen, formschlüssig eingesetzt werden können. Je nach Form und Größe der genannten vorstehenden Teile des Airbags kann anstatt der Bohrung 31 auch eine andersartig geformte Ausnehmung in dem formschlüssigen Halteglied 25 vorgesehen sein. Diese Ausnehmung kann sich auch in dem anderen formschlüssigen Halteglied 24 (siehe Fig. 4) oder in beiden Haltegliedern befinden, so daß eine optimale Befestigung des Airbags auf dem Aufnahmeglied 18 möglich ist.

Fig. 8 zeigt einen Schnitt durch das Aufnahmeglied 18 entlang der Linie VIII-VIII von Fig. 4.

Der Airbag 30 ist auf der Grundplatte mit der prismenförmigen Vertiefung 23 angeordnet und durch den verstellbaren Bügel 26 gesichert. Der Abstand des verstellbaren Bügels 26 zur Grundplatte mit der prismenförmigen Vertiefung 23 ist durch Muttern 28, 29 einstellbar. Über den Schnellverschluß 19 ist das Aufnahmeglied 18 mit dem Zwischenstück 17 gekuppelt, welches wiederum über den Flansch 20 mit der Innenseite des Deckels 11 des Behälters 1 verbunden ist. Das Zwischenstück 17, der Flansch 20 und der Deckel 11 des Behälters 1 sind in der Ansicht nach der Fig. 8 durch strichpunktierte Linien dargestellt. Die Befestigung des Aufnahmegliedes 18 auf dem Bolzen 21 des Zwischenstücks 17 erfolgt über eine nicht dargestellte Schraube, die durch die Wand der Hülse 19 hindurch in die umlaufende Nut 22 auf den Bolzen 21 eingreift und somit das Aufnahmeglied 18 gegen ein Verdrehen oder Verrutschen auf dem Bolzen 21 sichert.

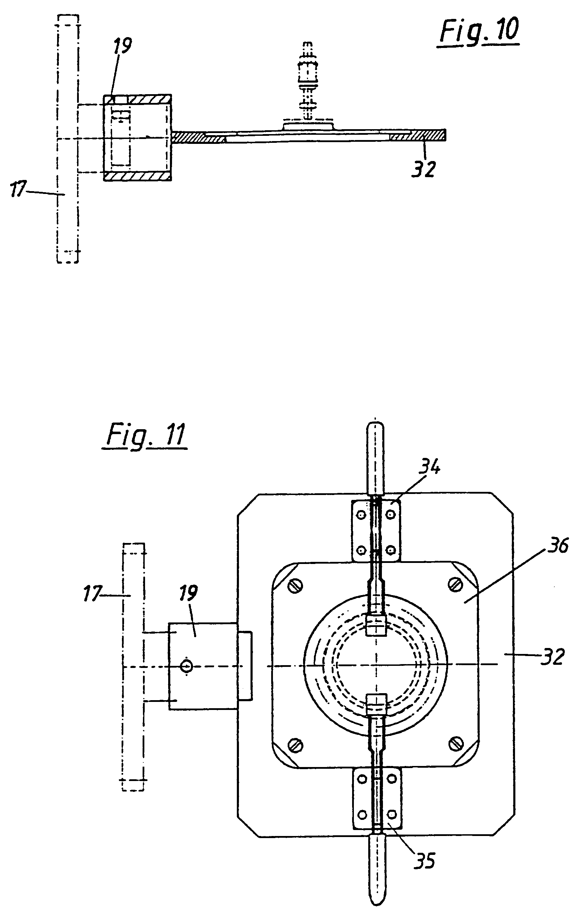

Fig. 9 zeigt eine alternative Ausführung des Aufnahmegliedes 18, das in der vorliegenden Ansicht durch das Bezugszeichen 18A gekennzeichnet ist. Der Airbag bzw. Gasgenerator 30 ist hierbei in einer entsprechend ausgeführten Ausnehmung in der Grundplatte 32 gelagert, wobei der Airbag bzw. Gasgenerator mit seitlich am Gasgenerator angebrachten Flanschen 35 auf der Grundplatte 32 aufliegt und von Kniehebelverschlüssen 33, 34 von oben gegen die Grundplatte 32 gedrückt wird.

Fig. 10 zeigt einen Schnitt in der Linie X-X von Fig. 9.

In dieser Ansicht ist erkennbar, daß die Grundplatte 32 fest an einer Hülse angeordnet ist, die Bestandteil eines Schnellverschlusses 19 ist. Über diesen Schnellverschluß 19 wird eine Verbindung zu dem Zwischenstück 17 hergestellt, das wiederum an der Innenseite des Deckels 11 des Behälters 1 angebracht ist. Die Funktionsweise des Schnellveschlusses 19 wurde bereits beschrieben.

Fig. 11 zeigt eine Draufsicht auf die Anordnung der Fig. 9, wobei in der Grundplatte 32 eine zusätzliche Ausnehmung vorgesehen ist, in welche eine Zwischenplatte 36 eingesetzt ist, auf welcher wiederum der Airbag aufliegt. Die Kniehebelverschlüsse 34, 35 sind auf der Grundplatte 32 so angeordnet, daß der Gasgenerator sicher gehalten ist.

Noch einmal bezugnehmend auf Fig. 1 ist in wenigstens einem Hohlprofil des Rahmens 5 ein Gegengewicht 37 angeordnet, das wenigstens teilweise den Gewichtsausgleich für den druckdichten Behälter 1 herstellt. Da der druckdichte Behälter eine Masse von bis zu 200 kg aufweisen kann, wird durch das in das Hohlprofil eingeschobene Gegengewicht 37 die Standfestigkeit der Vorrichtung zum Testen von Airbags erheblich erhöht.

Damit das Gegengewicht 37 nicht innerhalb des Hohlprofiles verrutschen kann, sind nicht dargestellte Schweiß- oder Schraubverbindungen zwischen dem Gegengewicht 37 und dem jeweiligen Hohlprofil vorgesehen, so daß ein Verrutschen des Gegengewichtes 37 unmöglich ist.

## Patentansprüche

1. Vorrichtung zum Testen von Airbags in einem druckdichten an einem Rahmen schwenkbar aufgehängten Behälter (1) mit einem Deckel (11),
**dadurch gekennzeichnet,** daß im Inneren des Behälters (1) eine auswechselbare Aufnahmeeinrichtung (16) zur Aufnahme unterschiedlicher Airbags bzw. Gasgeneratoren (30) am Deckel (11) des Behälters (1) angeordnet ist.

2. Vorrichtung nach Anspruch 1,
**dadurch gekennzeichnet,** daß die Aufnahmeeinrichtung (16) ein Zwischenstück (17) und ein Aufnahmeglied (18) aufweist.

3. Vorrichtung nach Anspruch 2,
**dadurch gekennzeichnet,** daß das Zwischenstück (17) und das Aufnahmeglied (18) mit einem Schnellverschluß (19) versehen sind.

4. Vorrichtung nach einem der Ansprüche 1 bis 3,
**dadurch gekennzeichnet,** daß auf dem Aufnahmeglied (18) eine Halterung (24,25,26) für die Airbags (30) vorgesehen ist.

5. Vorrichtung nach Anspruch 4,
**dadurch gekennzeichnet,** daß der Airbag (30) auf einer prismenförmigen Vertiefung (23) aufliegt.

6. Vorrichtung nach einem der Ansprüche 1 bis 5,
**dadurch gekennzeichnet,** daß die Airbags (30) formschlüssig in Haltegliedern (24,25) gehaltert sind.

7. Vorrichtung nach Anspruch 6,
**dadurch gekennzeichnet,** daß wenigstens eines der Halteglieder (24,25) auf dem Aufnahmeglied (18) versetzbar ist.

8. Vorrichtung nach Anspruch 4,
**dadurch gekennzeichnet,** daß die Halterung als verstellbarer Bügel (26) oder als Kniehebelverschluß (33,34) ausgebildet ist.

9. Vorrichtung nach einem der Ansprüche 1 bis 8,
**dadurch gekennzeichnet,** daß in dem Behälter (1) ein Füllkörper (13) zur Volumenkalibrierung angeordnet ist.

## Claims

1. Device for testing airbags in a pressure-tight container (1) pivotably suspended from a frame and provided with a cover (11), characterised in that an exchangeable receiving means (16) for receiving different airbags or gas generators (30) is arranged on the cover (11) of the container (1) in the interior of the container (1).

2. Device according to claim 1, characterised in that the receiving means (16) has an intermediate piece (17) and a receiving element (18).

3. Device according to claim 2, characterised in that the intermediate piece (17) and the receiving element (18) are provided with a quick-release clamp (19).

4. Device according to one of claims 1 to 3, characterised in that a holder (24, 25, 26) for the airbags (30) is provided on the receiving element (18).

5. Device according to claim 4, characterised in that the airbag (30) rests on a prismatic recess (23).

6. Device according to one of claims 1 to 5, characterised in that the airbags (30) are positively held in holding elements (24, 25).

7. Device according to claim 6, characterised in that at least one of the holding elements (24, 25) can be displaced on the receiving element (18).

8. Device according to claim 4, characterised in that the holder is in the form of an adjustable bracket (26) or a toggle clamp (33, 34).

9. Device according to one of claims 1 to 8, characterised in that filling material (13) is arranged in the container (1) for volume calibration.

## Revendications

1. Dispositif pour tester des sacs gonflables type "airbag" dans un récipient (1) tenant la pression, suspendu pivotant à un châssis et muni d'un couvercle (11), caractérisé en ce qu'un dispositif de réception (16) interchangeable pour recevoir différents sacs gonflables ou générateurs de gaz (30) est disposé sur le couvercle (11) du récipient (1).

2. Dispositif selon la revendication 1, caractérisé en ce que le dispositif de réception (16) présente une pièce intermédiaire (17) et un élément de réception (18).

3. Dispositif selon la revendication 2, caractérisé en ce que la pièce intermédiaire (17) et l'élément de réception (18) comportent une fermeture rapide (19).

4. Dispositif selon l'une quelconque des revendications 1 à 3, caractérisé en ce qu'un moyen de maintien (24,25,26) pour les sacs gonflables (30) est prévu sur l'élément de réception (18).

5. Dispositif selon la revendication 4, caractérisé en ce que le sac gonflable (30) repose sur un évidement (23) prismatique.

6. Dispositif selon l'une quelconque des revendications 1 à 5, caractérisé en ce que les sacs gonflables (30) sont maintenus à ajustement dans des éléments de maintien (24,25).

7. Dispositif selon la revendication 6, caractérisé en ce qu'au moins un des éléments de maintien (24,25) de l'élément de réception (18) est réglable.

8. Dispositif selon la revendication 4, caractérisé en ce que le moyen de maintien est réalisé sous la forme d'un collier réglable 26 ou d'une fermeture à genouillère (33,34).

9. Dispositif selon l'une quelconque des revendications 1 à 8, caractérisé en ce qu'un corps de remplissage (13) est disposé dans le récipient (1) pour le calibrage du volume.
